# EUROPÄISCHE PATENTANMELDUNG

(11) **EP 1 833 143 A2**
(43) Veröffentlichungstag der Anmeldung: **12.09.2007**
(21) Anmeldenummer: 06125055.1
(22) Anmeldetag: 30.11.2006
(51) Int. Cl.: H02K 7/10, F16H 7/08

(54) **Elektromotorischer Stellantrieb**

(30) Priorität: 20.01.2006 DE 202006000966 U
(71) Anmelder: Elodrive GmbH Stellantriebstechnik, 32423 Minden (DE)
(72) Erfinder: Buchholz, Bernd, 32369 Rahden (DE); Palm, Dieter, 33824 Werther (DE)
(74) Vertreter: Dantz, Jan Henning

(57) **Zusammenfassung**

Elektromotorischer Stellantrieb für schwenkbare Stellglieder, der ein Gehäuse aufweist, in dem die Antriebsteile einer von einem Antriebsmotor antreibbaren Getriebekette montiert sind, die mit einem Abtriebsglied (10) ausgestattet ist, dem eine zentrierende, zwei gegenläufig bewegbare Spannelemente aufweisende Spannvorrichtung zum Spannen einer mit dem Stellglied fest verbundenen Übertragungswelle derart zugeordnet ist, dass die Spannvorrichtung synchron mit dem Abtriebsglied (10) der Getriebekette gegenüber dem Gehäuse der Getriebekette schwenkbar ist, und der Schwenkwinkel der Spannvorrichtung durch ortsfest wirkende, am Gehäuse der Getriebekette verstellbar sowie festsetzbar angeordnete Anschläge begrenzt ist, wobei an der Spannvorrichtung gegen die verstellbaren, jedoch festsetzbaren Anschläge anlaufende Federelemente (20, 21) angesetzt und/oder dass die Anschläge federnd ausgebildet sind.

## Beschreibung

Die Erfindung bezieht sich auf einen elektromotorischen Stellantrieb für schwenkbare Stellglieder, der ein Gehäuse aufweist, in dem die Antriebsteile einer von einem Antriebsmotor antreibbaren Getriebekette montiert sind, die mit einem Abtriebsglied ausgestattet ist, dem eine zentrierende, zwei gegenläufig bewegbare Spannelemente aufweisende Spannvorrichtung zum Spannen einer mit dem Stellglied fest verbundenen Übertragungswelle derart zugeordnet ist, dass die Spannvorrichtung synchron mit dem Abtriebsglied der Getriebekette gegenüber dem Gehäuse der Getriebekette schwenkbar ist, und der Schwenkwinkel der Spannvorrichtung durch ortsfest wirkende, am Gehäuse der Getriebekette verstellbar sowie festsetzbar angeordnete Anschläge begrenzt ist.

Der in Rede stehende elektromotorische Stellantrieb ist besonders für schwenkbare Stellglieder in Form von Klappen in der Heizungs-, Klima- und Lüftungstechnik geeignet. Der Schwenkwinkel ist durch die verstellbaren Anschläge einstellbar und beträgt in der Normalausführung maximal 95°. Die Drehzahl des Antriebsmotors ist relativ hoch, so dass die Getriebekette mehrere Getriebestufen aufweist, da die Drehzahl des Abtriebsgliedes deutlich geringer ist. Das Abtriebsglied überträgt mittels der Übertragungswelle die Drehbewegung auf das Stellglied.

Die Spannvorrichtung ist so ausgelegt, dass unterschiedliche Querschnitte und Abmessungen der Übertragungswellen gespannt werden können. Dabei ist eine Zentrierung notwendig, damit eine Verspannung des Stellantriebes und/oder der Übertragungswelle vermieden wird.

Die Spannvorrichtungen sind so ausgelegt, dass das Spannen der Übertragungswelle in einfachster Weise erfolgt. Dazu ist jede Spannvorrichtung mit zwei gegenläufig bewegbaren Spannelementen versehen. Diese Bewegung wird von einer sogenannten Differentialschraube abgeleitet, die mit zwei gegenläufigen Gewinden gleicher oder ungleicher Steigung versehen ist.

Die in Rede stehenden elektromotorischen Stellantriebe haben sich in der Praxis bestens bewährt. Der Antriebsmotor wird jedoch erst abgeschaltet, wenn der Motorstrom eine bestimmte Stärke übersteigt, d.h., wenn die Spannvorrichtung gegen den Anschlag fährt, kann keine Bewegung mehr erfolgen, so dass die Stärke des Stromes ansteigt. Dies führt jedoch zu einer zusätzlichen Belastung des Antriebsmotors, wodurch die Lebensdauer verringert wird. Ferner wird es als Nachteil angesehen, dass die Getriebekette nach dem Anlaufen der Spannvorrichtung gegen einen Anschlag stoßartig belastet wird. Um einen Bruch oder eine Beschädigung von Antriebsteilen zu vermeiden, wird die Getriebekette deshalb für Drehmomente ausgelegt, die für die Verstellung des Stellgliedes nicht notwendig sind oder anders ausgedrückt, die Getriebekette wird überdimensioniert, wodurch nicht nur die Herstellkosten erhöht sind, sondern auch unnötig große Abmessungen erreicht werden.

Der vorliegenden Erfindung liegt die Aufgabe zugrunde, einen elektromotorischen Stellantrieb der eingangs näher beschriebenen Art so zu gestalten, dass die Getriebekette unter Beibehaltung eines relativ geringen Sicherheitsfaktors ausschließlich für ein solches Drehmoment ausgelegt ist, welches für die Verstellung des Stellgliedes notwendig ist.

Die gestellte Aufgabe wird gelöst, indem an der Spannvorrichtung gegen die verstellbaren, jedoch festsetzbaren Anschläge anlaufende Federelemente angesetzt und/oder dass die Anschläge federnd ausgebildet sind.

Durch die erfindungsgemäße Lösung wird die stoßartige Belastung der Getriebekette vermieden. Dabei ist es ausreichend, wenn an der Spannvorrichtung, insbesondere an dem Gehäuse der Spannvorrichtung, die Federelemente angesetzt sind, oder wenn die Anschläge selbst federnd oder nachgiebig ausgebildet sind. Dadurch wird der Motorstrom nicht schlagartig erhöht, sondern er wird über einen vorgegebenen Zeitraum erhöht, bzw. die Bewegung der Spannvorrichtung gegenüber dem Gehäuse der Getriebekette wird sinngemäß gebremst. Es erfolgt demzufolge ein weiches Anlaufen der Federelemente gegen die Anschläge oder eines starren Elementes gegen die federnden Anschläge. Durch die Kombination der Federelemente mit den federnden Anschlägen wird jedoch ein äußerst sanftes Anlaufen gegen die Anschläge erzielt. Da die Getriebekette nunmehr auf das für die Verstellung des Stellgliedes notwendige Drehmoment ausgelegt ist, verringern sich entweder die Abmessungen der Getriebekette oder es können Antriebsteile mit einer geringeren Festigkeit eingesetzt werden. Im ersteren Falle verringern sich die Abmessungen, so dass eine äußerst kompakte Bauweise gegeben ist. Im zweiten Falle verringern sich die Herstellkosten, aufgrund der preisgünstigeren Werkstoffe.

In einer bevorzugten Ausführungsform ist vorgesehen, dass das die Getriebekette aufnehmende Gehäuse an der dem Antriebsmotor abgewandten Seite stufenförmig abgesetzt ist, und dass die Spannvorrichtung in dem Absatz angeordnet ist und um die Drehachse des Abtriebsgliedes der Getriebekette schwenkbar ist. Da die Bauhöhe der Spannvorrichtung deutlich geringer ist als der daneben angeordnete Gehäuseteil, steht die Spannvorrichtung gegenüber diesem besagten Teil des Gehäuses nicht vor, so dass insgesamt eine kompakte Bauweise gegeben ist. Vorzugsweise ist das Gehäuse an der dem Antriebsmotor abgewandten Seite beidseitig stufenförmig abgesetzt.

Das Abtriebsglied der Getriebekette ist in der Standardausführung eine Hülse. Sie steht gegenüber dem stufenförmig abgesetzten Gehäuse an der der Spannvorrichtung gegenüberliegenden Seite vor. Das Gehäuse der Spannvorrichtung ist ebenfalls zweiteilig ausgebildet und besteht aus einem Ober- und Unterteil, die durch zwei symmetrisch zur Drehachse der Spannvorrichtung stehende Schrauben miteinander verbunden sind. In einer Wandung des abgesetzten Gehäuseteils der Getriebekette sind zur Verstellung der Anschläge Langlöcher vorgesehen. Damit die Anschläge bei jedem Drehwinkel der Spannvorrichtung auch von den Federelementen angelaufen werden, ist vorgesehen, dass die Langlöcher konzentrisch zur Drehachse der Spannvorrichtung verlaufen. Es ist ferner vorgesehen, dass an einem Gehäuseteil der Spannvorrichtung gegen die Anschläge anlaufende Formfedern angesetzt sind. Diese können einstückig mit dem Gehäuseteil ausgebildet sein, sie können jedoch auch mittels mechanischer Verbindungselemente daran festgesetzt sein. Die Gehäuseteile bestehen zweckmäßigerweise aus Kunststoff. Demzufolge wäre es fertigungstechnisch günstig, wenn die Formfedern im Zuge des Spritzvorganges der Gehäuseteile ebenfalls gespritzt würden. Es ist jedoch alternativ auch möglich, dass metallische Formfedern nachträglich an das Gehäuseteil angesetzt werden.

Damit die Federelemente in beiden Endstellungen des Gehäuses 11, 12 gegen die Anschläge laufen, ist vorgesehen, dass die Federelemente haken-, bogenförmig oder C-förmig ausgebildet sind. Dadurch werden in einfachster Weise die Anschläge in beiden Endstellungen angefahren.

Anhand der beiliegenden Zeichnungen wird die Erfindung noch näher erläutert.

Es zeigen:
- Figur 1: das das Abtriebsglied aufweisende Teil des Gehäuses der Spannvorrichtung und
- Figur 2: das mit dem Gehäuseteil gemäß der Figur 1 verschraubbare Gehäuseteil.

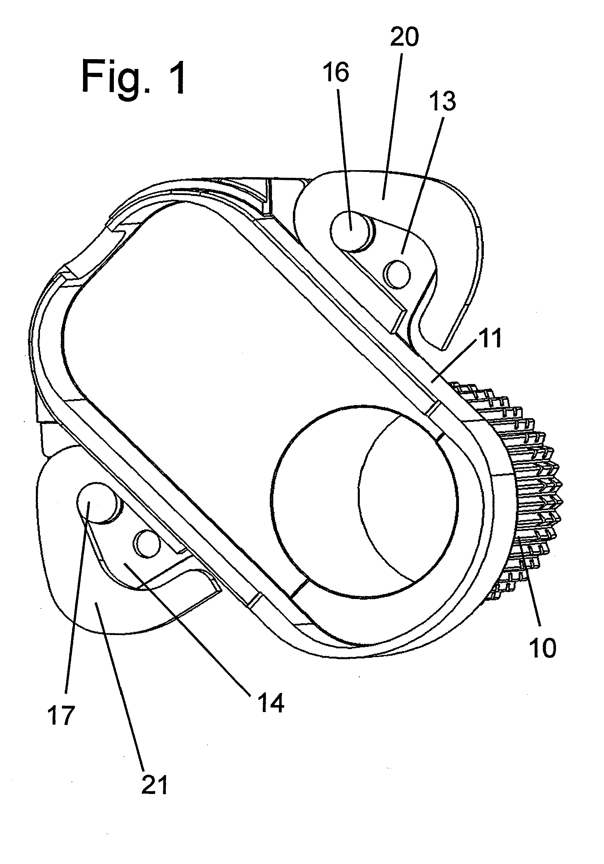

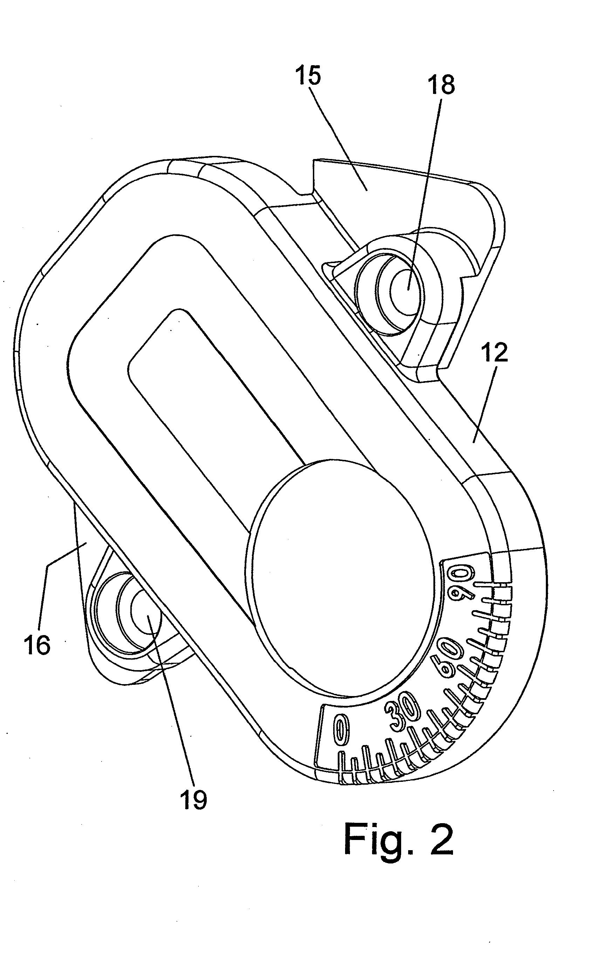

Aus Gründen der vereinfachten Darstellung ist der elektromotorische Stellantrieb als Ganzes nicht dargestellt. Die Getriebekette besteht aus mehreren Getriebestufen, um die Drehzahl des die Getriebekette antreibenden Motors so weit zu reduzieren, dass die Verstellgeschwindigkeit bzw. die Drehgeschwindigkeit eines zu verstellenden Stellgliedes den Erfordernissen entspricht. Die Getriebekette besteht aus miteinander kämmenden Zahnrädern. Die Getriebekette enthält außerdem das Abtriebsglied des Stellantriebes, welches im dargestellten Ausführungsbeispiel eine mit einer Außenverzahnung versehene Buchse 10 ist. Die Buchse 10 ist fest mit einem Gehäuseteil 11 verbunden, in dem die Bauteile einer aus Darstellungsgründen nicht gezeichneten Spannvorrichtung angeordnet sind. Die Spannvorrichtung enthält zwei gegenläufig bewegbare Spannelemente, die durch Drehung einer sogenannten Differentialschraube gegenläufig bewegbar sind, so dass eine durch die Buchse 10 geführte Übertragungswelle gespannt bzw. auch gelöst wird. Die Spannvorrichtung ist so ausgelegt, dass unterschiedliche Querschnitte und unterschiedliche Abmessungen von Übertragungswellen gespannt werden können. Es ergibt sich insbesondere aus der Figur 1, dass das Gehäuseteil 11 der Drehbewegung der Buchse 10 folgt. Demzufolge wird auch das Gehäuseteil 11 gegenüber dem Gehäuse des nicht dargestellten Stellantriebes verschwenkt. Das Gehäuseteil 11 ist mit einem weiteren Gehäuseteil 12 durch nicht dargestellte Schrauben verschraubt. Dazu sind seitlich an dem Gehäuseteil 11 Flansche 13, 14 und an dem Gehäuseteil 12 Flansche 15, 16 angeformt. In den Flanschen 13, 14 sind Schraubenlöcher 16, 17 vorgesehen, während an den Flanschen 15, 16 des Gehäuseteils 12 an den Flanschen noch Töpfe angeformt sind, um die Köpfe von Zylinderkopf schrauben aufzunehmen. Die Schraubenlöcher der Flansche 15, 16 sind durch die Bezugszeichen 18, 19 gekennzeichnet. In einer Wandung des Gehäuses der Getriebekette sind in nicht näher dargestellter Weise mit zur Drehachse der Buchse 10 konzentrisch verlaufende Langlöcher vorgesehen, um Anschläge festzulegen. Wie die Figur 2 zeigt, beträgt der maximale Schwenkwinkel der Gehäuseteile 11, 12 95°. Dazu ist das Gehäuseteil 12 mit einer Skala versehen. Wie die Figur 1 zeigt, sind an dem Gehäuseteil 12 nachgiebige Federelemente 20, 21 angeformt, die gegen die Anschläge des Gehäuses der Getriebekette laufen, wenn das Stellglied durch den elektromotorischen Stellantrieb bewegt wird. Dadurch wird sinngemäß in den Endstellungen das Gehäuse 11, 12 abgebremst, so dass der Motorstrom ansteigt. Durch ein Überstromrelais erfolgt dann die Abschaltung des Antriebsmotors. Wie die Figur 1 zeigt, sind die Federelemente 20, 21 haken-, bogenförmig oder C-förmig gestaltet, so dass in beiden Endstellungen der Gehäuseteile 11, 12 die Anschläge angefahren werden. Dadurch ergibt sich eine konstruktiv einfache Lösung.

Durch diese nachgiebigen Federelemente 20, 21 werden Stöße auf die Antriebsteile der Antriebskette vermieden, so dass eine schonende Behandlung erfolgt, so dass eine Überdimensionierung entfallen kann und diese Antriebsteile ausschließlich auf das zur Verstellung des Stellgliedes notwendige Drehmoment ausgelegt werden. Dabei wird ein ausreichender Sicherheitsfaktor berücksichtigt.

Es ist auch möglich, dass starre Elemente an einem Gehäuseteil 11 oder 12 angesetzt oder angeformt sind, und dass die Anschläge elastisch verformbar bzw. nachgiebig gestaltet sind. Darüber hinaus ist es in einer dritten Ausführung auch denkbar, dass an einem Gehäuseteil elastisch verformbare Federelemente angesetzt oder angeformt sind und dass die Anschläge ebenfalls elastisch bzw. nachgiebig sind.

Die Erfindung ist nicht auf das dargestellte Ausführungsbeispiel beschränkt. Wesentlich ist, dass zumindest an einem Gehäuseteil 11 oder 12 Federelemente 20, 21 angeordnet sind, die ein stoßartiges oder schlagartiges Auftreffen auf die festen, jedoch verstellbaren Anschläge verhindern.

## Patentansprüche

1. Elektromotorischer Stellantrieb für schwenkbare Stellglieder, der ein Gehäuse aufweist, in dem die Antriebsteile einer von einem Antriebsmotor antreibbaren Getriebekette montiert sind, die mit einem Abtriebsglied (10) ausgestattet ist, dem eine zentrierende, zwei gegenläufig bewegbare Spannelemente aufweisende Spannvorrichtung zum Spannen einer mit dem Stellglied fest verbundenen Übertragungswelle derart zugeordnet ist, dass die Spannvorrichtung synchron mit dem Abtriebsglied (10) der Getriebekette gegenüber dem Gehäuse der Getriebekette schwenkbar ist, und der Schwenkwinkel der Spannvorrichtung durch ortsfest wirkende, am Gehäuse der Getriebekette verstellbar sowie festsetzbar angeordnete Anschläge begrenzt ist, **dadurch gekennzeichnet, dass** an der Spannvorrichtung gegen die verstellbaren, jedoch festsetzbaren Anschläge anlaufende Federelemente (20, 21) angesetzt und/oder dass die Anschläge federnd ausgebildet sind.

2. Elektromotorischer Stellantrieb nach Anspruch 1, **dadurch gekennzeichnet, dass** das die Getriebekette aufnehmende Gehäuse an der dem Antriebsmotor abgewandten Seite stufenförmig abgesetzt ist, und dass die Spannvorrichtung in dem Absatz angeordnet und um die Drehachse des Abtriebsgliedes der Getriebekette schwenkbar ist.

3. Elektromotorischer Stellantrieb nach Anspruch 2, **dadurch gekennzeichnet, dass** das die Getriebekette aufnehmende Gehäuse an der dem Antriebsmotor abgewandten Seite beidseitig stufenförmig abgesetzt ist, und dass die Bauteile der Spannvorrichtung in einem Gehäuse angeordnet sind.

4. Elektromotorischer Stellantrieb nach Anspruch 3, **dadurch gekennzeichnet, dass** das Gehäuse der Spannvorrichtung aus zwei Gehäuseteilen (11, 12) besteht, die durch symmetrisch zur Drehachse des Abtriebsgliedes (10) stehende Schrauben miteinander verbunden sind.

5. Elektromotorischer Stellantrieb nach einem oder mehreren der vorhergehenden Ansprüche 1 - 4, **dadurch gekennzeichnet, dass** an einem Gehäuseteil (11, 12) quer zur Drehachse der Spannvorrichtung stehende Flansche vorgesehen sind, an dem Formfedern angebracht oder angesetzt sind.

6. Elektromotorischer Stellantrieb nach einem oder mehreren der vorhergehenden Ansprüche 1 - 5, **dadurch gekennzeichnet, dass** in dem die Getriebekette aufnehmenden Gehäuse im stufenförmig abgesetzten Bereich konzentrisch zur Drehachse der Spannvorrichtung verlaufende Langlöcher vorgesehen sind, in denen die Anschläge festgelegt sind.

7. Elektromotorischer Stellantrieb nach einem oder mehreren der vorhergehenden Ansprüche 1 - 6, **dadurch gekennzeichnet, dass** die Federelemente (20, 21) derart haken-, bogenförmig oder C-förmig ausgebildet sind, dass in beiden Endstellungen des Gehäuses (11, 12) die ortsfesten jedoch einstellbaren Anschläge anfahrbar sind.
